# FASCICULE DE BREVET EUROPEEN

(11) **EP 2 710 326 B1**
(45) Date de publication et mention de la délivrance du brevet: **26.04.2017**
(21) Numéro de dépôt: 12728706.8
(22) Date de dépôt: 16.05.2012
(51) Int. Cl.: F42B 10/66, B64G 1/26

(54) **SYSTEME POUR LE PILOTAGE EN FORCE ET LE CONTROLE D'ATTITUDE EN VOL D'UN VEHICULE ET ENGIN COMPORTANT UN TEL SYSTEME**
BORDSYSTEM FÜR FLUGLAGENSTEUERUNG UND DIREKTSCHUBFLUGSTEUERUNG EINES FAHRZEUGS UND FAHRZEUG MIT EINEM SOLCHEN SYSTEM
IN-FLIGHT ATTITUDE CONTROL AND DIRECT THRUST FLIGHT CONTROL SYSTEM OF A VEHICLE AND CRAFT COMPRISING SUCH A SYSTEM

(30) Priorité: 19.05.2011 FR 1101524
(43) Date de publication de la demande: 26.03.2014
(73) Titulaire: HERAKLES, 33185 Le Haillan (FR)
(72) Inventeur: CAUBET, Pascal, F-33160 St Medard En Jalles (FR); FERRANT, Aurore, F-33160 St Aubin De Medoc (FR)
(74) Mandataire: Delumeau, François Guy
(86) Numéro de dépôt international: PCT/FR2012/051103
(87) Numéro de publication internationale: WO 2012/156642

(56) Documents cités:
- GB-A- 2 251 834
- US-A1- 2004 245 371
- US-A1- 2011 029 160

## Description

### Arrière-plan de l'invention

L'invention concerne un système pour le pilotage en force et le contrôle d'attitude en vol d'un véhicule, ou DACS ("Divert and Attitude Control System").

L'invention est notamment applicable à des parties hautes, ou parties terminales de missiles intercepteurs utilisés pour la défense antimissiles balistiques, afin d'assurer le maintien de la trajectoire désirée et de l'attitude en fin de mission. L'invention peut toutefois être utilisée pour d'autres types de véhicules aériens ou spatiaux, par exemple pour des missiles de défense anti-aérienne, des missiles air-air, des véhicules de rentrée atmosphérique ou encore des modules d'exploration spatiale.

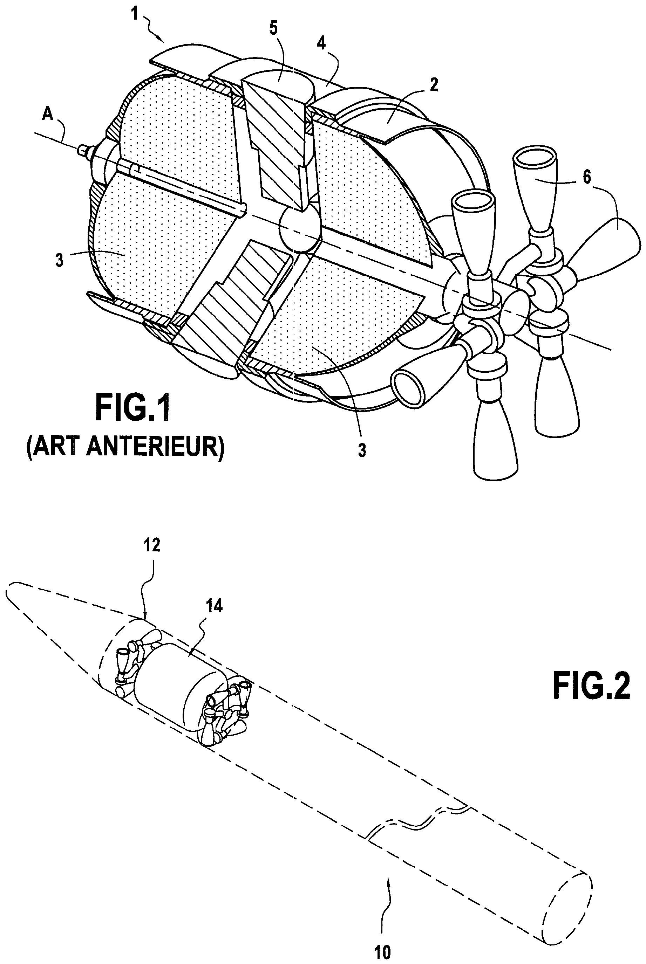

Un système DACS connu pour un véhicule constituant la partie terminale d'un missile intercepteur est montré très schématiquement sur la figure 1. Ce système DACS 1 comporte un corps de propulseur 2 contenant deux blocs de propergol 3 disposés idéalement de part et d'autre d'une couronne métallique 4 sur laquelle sont montées des vannes 5 de pilotage en force ou déviation de trajectoire ("Divert"). Les vannes "Divert" 5 sont au nombre de quatre et sont disposées régulièrement autour de l'axe A du véhicule 1, sensiblement au niveau de son centre de gravité, de manière à générer des poussées latérales perpendiculairement à l'axe A, sans perturbation importante de l'attitude du véhicule 1. D'autres vannes 6 de correction d'attitude, au nombre de six, sont montées à l'arrière du corps de propulseur 2. Les vannes "ACS" 6 comprennent une première paire de vannes avec deux vannes orientées dans une première direction sensiblement perpendiculaire à l'axe A, une deuxième paire de vannes avec deux vannes orientées dans une deuxième direction opposée à la première direction, ainsi que deux autres vannes orientées dans des directions opposées l'une à l'autre et sensiblement perpendiculaires à l'axe A et à la première et la deuxième direction. Un dispositif de commande (non illustré) comprenant une électronique de commande et des actionneurs est prévu pour commander de façon sélective l'ouverture d'une ou deux des vannes 5 lorsqu'une correction de trajectoire est nécessaire, et pour commander de façon sélective l'ouverture d'une ou plusieurs des vannes 6 lorsqu'une correction d'attitude est requise (correction de lacet, roulis et/ou tangage). Les blocs 3 de propergol sont utilisés simultanément pour alimenter les vannes 5 et 6.

Une telle architecture d'un système DACS requiert un total de dix vannes réparties en deux groupes ayant des fonctions distinctes, les vannes de déviation de trajectoire et les vannes de contrôle d'attitude étant habituellement de types différents, ce qui est pénalisant en termes de masse, d'encombrement et de coûts. En outre, l'emplacement de vannes "Divert" à l'intérieur du corps de propulseur et entre deux blocs de propergol n'est pas optimal d'un point de vue sécurité pyrotechnique en particulier lors des opérations d'assemblage, et rend le contrôle et la maintenance du système propulsif plus complexes. De plus, l'emplacement des vannes "Divert" limite la durée de fonctionnement du fait de l'exposition à des températures élevées ou impose une limitation de la température des gaz, ce qui dans les deux cas nuit à la performance.

D'autres systèmes DACS sont décrits dans le document GB 2 251 834 A.

Selon un mode de réalisation, deux ensembles de quatre vannes sont disposés de part et d'autre du centre de gravité du véhicule. Dans chaque ensemble, deux vannes exercent des poussées dans une première direction et deux autres vannes exercent des poussées dans une deuxième direction opposée, les axes de poussées des vannes étant situés à distance de l'axe longitudinal du véhicule de part et d'autre de celui-ci.

Un tel système permet à un instant donné de provoquer une déviation de trajectoire uniquement dans l'axe de poussée des vannes. Pour dévier la trajectoire dans une autre direction, il est d'abord nécessaire d'orienter le missile autour de son axe en utilisant la capacité de contrôle d'attitude en roulis. Il en résulte une perte en temps de réponse et en manoeuvrabilité et une forte surconsommation. Il en est de même notamment pour une correction de lacet.

Selon un autre mode de réalisation, deux ensembles de quatre vannes sont aussi disposés de part et d'autre du centre de gravité du véhicule. Dans chaque ensemble, deux vannes exercent des poussées dans des directions opposées alignées selon un même premier axe et deux autres vannes exercent des poussées dans des directions opposées alignées selon un même deuxième axe, le premier axe et le deuxième axe étant perpendiculaires entre eux et à l'axe du véhicule avec leur intersection située sur l'axe du véhicule. Un contrôle en roulis n'est donc pas possible.

### Objer et résumé de l'invention

L'invention a pour but de remédier aux inconvénients précités et, selon un de ses aspects, propose à cet effet un système de pilotage pour le pilotage en force et le contrôle d'attitude en vol d'un véhicule, comprenant un corps de propulseur et une pluralité de vannes capables de générer des poussées latérales en étant mises en communication avec le corps de propulseur au moyen d'un dispositif de commande agencé pour agir individuellement sur chaque vanne, système dans lequel :
- les vannes sont réparties en un premier et un deuxième ensemble de vannes, les deux ensembles étant disposés à distance l'un de l'autre respectivement vers l'avant et vers l'arrière du corps de propulseur, de façon sensiblement symétrique par rapport au centre de gravité du véhicule situé sur un axe longitudinal de celui-ci,
- chaque ensemble de vannes est constitué de quatre vannes et comprend une première paire de vannes disposées pour générer des poussées latérales dans des directions de poussée ayant des sens opposés, selon des axes de poussée non alignés et parallèles à un premier axe et une deuxième paire de vannes disposées pour générer des poussées latérales dans des directions de poussée ayant des sens opposés, selon des axes de poussée non alignés et parallèles à un deuxième axe, et
- le premier axe et le deuxième axe sont distincts et perpendiculaires à l'axe longitudinal du véhicule, caractérisé en ce que les vannes du premier ensemble sont disposées pour que leurs poussées induisent un moment de rotation autour de l'axe longitudinal dans un sens f1 et les vannes du deuxième ensemble sont disposées pour que leurs poussées induisent un moment de rotation autour de l'axe longitudinal dans un sens f2 opposé au sens f1.

De préférence, dans chaque ensemble de vannes, le premier et le deuxième axe sont perpendiculaires entre eux.

De préférence, les vannes sont toutes identiques.

De préférence encore, les axes de poussée de toutes les vannes sont situés à même distance de l'axe longitudinal du véhicule.

De préférence encore, les vannes sont situées à l'extérieur du corps de propulseur.

Le corps de propulseur renferme un générateur de gaz comprenant du propergol solide ou des ergols liquides ou des ergols hybrides. Dans le premier cas, le corps de propulseur renferme avantageusement un bloc unique de propergol solide, placé de préférence au centre de gravité du véhicule pour conservation du centrage du système tout au long de la combustion.

Par rapport aux systèmes DACS connus décrits plus haut, le système selon l'invention avec deux ensembles de quatre vannes disposés comme indiqué est avantageux en ce que, avec un nombre réduit de vannes, il permet toutes corrections désirées de trajectoire et d'attitude de façon instantanée ou quasi instantanée donc avec un temps de réponse très bref.

Diverses corrections, notamment la déviation de trajectoire, étant obtenues par commande sélective de l'ouverture de façon simultanée d'une ou plusieurs vannes de chaque ensemble de vannes, il en résulte en outre d'autres avantages.

D'une part, en répartissant les poussées requises sur deux ensembles de vannes, il est possible, pour une même poussée résultante désirée, de réduire la poussée individuelle demandée à chaque vanne. A performance égale en poussée corrective, la masse et les dimensions des vannes, et la puissance requise pour leur activation, peuvent être plus réduites, et/ou la pression dans le corps de propulseur peut être diminuée ce qui, dans l'un et l'autre cas, améliore la précision de pilotage.

D'autre part, la mutualisation des ressources en vannes pour les fonctions de pilotage en force et de contrôle d'attitude permet avantageusement l'utilisation de vannes identiques, contribuant à la simplification de la définition et de la réalisation du système et réduisant les coûts de développement et de fabrication.

Un montage préféré des vannes à l'extérieur du corps de propulseur permet aussi de simplifier la définition et la réalisation du système, tout en présentant une bonne sécurité d'un point de vue pyrotechnique.

En outre, dans le cas d'une génération de gaz par propergol solide, l'utilisation d'un bloc unique de propergol va également dans le sens de la simplification et d'une réduction des coûts.

Selon un autre de ses aspects, l'invention vise aussi un engin aérien ou spatial comprenant un système tel que défini ci-avant, en particulier un missile ayant une partie terminale équipée d'un tel système.

### Brève description des dessins

L'invention sera mieux comprise à la lecture de la description faite ci-après, à titre indicatif mais non limitatif, en référence aux dessins annexés sur lesquels :
- la figure 1, déjà décrite, montre très schématiquement une partie terminale de missile intercepteur équipé d'un système DACS de l'art antérieur,
- la figure 2 montre très schématiquement un missile intercepteur ayant une partie terminale équipée d'un système DACS selon un mode de réalisation de l'invention ;
- les figures 3, 4 et 5 montrent à plus grande échelle la partie terminale du missile de la figure 2, respectivement vue de côté, vue de l'arrière et vue de l'avant ;
- la figure 6 montre un vecteur de poussée latérale correspondant à une déviation de trajectoire désirée ;
- la figure 7 montre comment le vecteur de poussée de la figure 6 peut être produit par combinaison de poussées individuelles générées par des vannes des deux ensembles de vannes du système DACS équipant la partie terminale de missile des figures 3, 4 et 5 ;
- la figure 8 montre comment une correction de roulis peut être produite par combinaison de poussées individuelles générées par des vannes des deux ensembles de vannes du système DACS équipant la partie terminale de missile des figures 3, 4 et 5 ;
- la figure 9 montre comment une correction en lacet peut être produite par combinaison de poussées individuelles générées par des vannes des deux ensembles de vannes du système DACS équipant la partie terminale de missile des figures 3, 4 et 5 ; et
- la figure 10 montre comment une correction en tangage peut être produite par combinaison de poussées individuelles générées par des vannes des deux ensembles de vannes du système DACS équipant la partie terminale de missile des figures 3, 4 et 5.

### Description détaillée de modes de réalisation

La figure 2 montre très schématiquement un missile intercepteur 10 destiné à la défense anti-missile balistique, ayant une partie haute ou partie terminale 12 équipée d'un système DACS 14 pour piloter la partie terminale 12 par déviation éventuelle de trajectoire et correction éventuelle d'attitude en fin de mission après séparation du reste du missile.

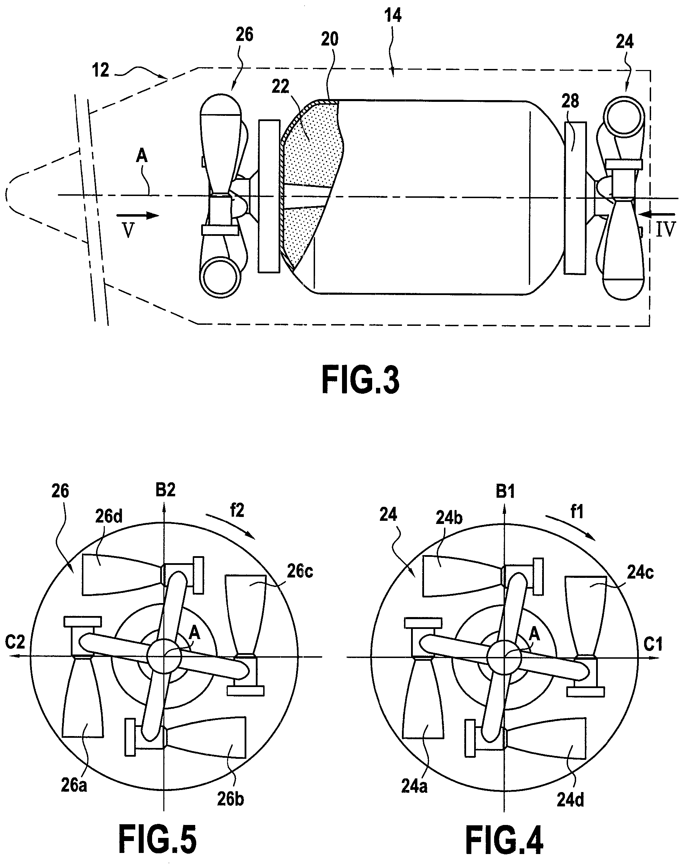

Le système DACS 14 (figures 3, 4 et 5) comprend un corps de propulseur 20 renfermant un bloc de propergol solide 22, un premier ensemble 24 de vannes situé à l'arrière du corps de propulseur 20, un deuxième ensemble 26 de vannes situé à l'avant du corps de propulseur 20 et un dispositif électronique de commande 28 permettant de commander sélectivement l'ouverture et la fermeture des vannes du premier et du deuxième ensemble de vannes au moyen d'actionneurs (non représentés). Les termes "arrière" et "avant" sont utilisés en référence au sens de déplacement de la partie terminale 12.

Le premier ensemble 24 de vannes est avantageusement constitué de quatre vannes 24a, 24b, 24c, 24d et le deuxième ensemble 26 de vannes est également avantageusement constitué de quatre vannes 26a, 26b, 26c et 26d.

En position ouverte, chaque vanne est en communication avec le corps de propulseur et génère une poussée latérale par éjection de gaz produit par la combustion du propergol. Par poussée latérale, on entend ici une poussée selon un axe de poussée perpendiculaire ou sensiblement perpendiculaire à l'axe A de la partie terminale 12. Un angle de quelques degrés entre la poussée produite et un plan perpendiculaire à l'axe A peut être acceptable dans la mesure où, sous l'action des poussées combinées des différentes vannes ouvertes, il n'est pas engendré de poussée d'amplitude significative dans un sens ou dans l'autre selon l'axe A.

Dans le premier ensemble 24, les vannes 24a et 24c sont orientées pour produire des poussées latérales dans des directions mutuellement opposées parallèles à un axe B1 tandis que les vannes 24b et 24d sont orientées pour produire des poussées latérales dans des directions mutuellement opposées parallèles à un axe C1. Les axes B1 et C1 sont ici orthogonaux ou sensiblement orthogonaux et se coupent sur l'axe A. On notera que les axes de poussée des vannes 24a et 24c sont parallèles mais non alignés en étant situés de part et d'autre de l'axe B1. De même, les axes de poussée des vannes 24b et 24d sont parallèles mais non alignés en étant de préférence situés de part et d'autre de l'axe C1. Ainsi, les poussées des vannes de l'ensemble 24 induisent un moment de rotation dans un sens f1 autour de l'axe A.

Dans le deuxième ensemble 26, les vannes 26a et 26c sont orientées pour produire des poussées latérales dans des directions mutuellement opposées parallèles à un axe B2 tandis que les vannes 26b et 26d sont orientées pour produire des poussées latérales dans des directions mutuellement opposées parallèles à un axe C2. Les axes B2 et C2 sont ici orthogonaux ou sensiblement orthogonaux et se coupent sur l'axe A. On notera que les axes de poussée des vannes 26a et 26c sont parallèles mais non alignés, en étant de préférence situés de part et d'autre de l'axe B2. De même, les axes de poussée des vannes 26b et 26d sont parallèles mais non alignés en étant de préférence situés de part et d'autre de l'axe C2. Les vannes de l'ensemble 26 sont disposées pour que leurs poussées induisent un moment de rotation autour de l'axe A dans un sens f2 opposé au sens f1.

De préférence, mais non nécessairement, les axes B1 et B2 sont parallèles entre eux, de même que les axes C1 et C2.

Dans l'exemple illustré, l'ensemble 24 de vannes est monté à l'extérieur du corps de propulseur 20, vers l'arrière de celui-ci. L'ensemble 26 de vannes est monté à l'extérieur du corps de propulseur 20 vers l'avant de celui-ci, les ensembles de vannes 24 et 26 étant disposés symétriquement par rapport au centre de gravité de l'ensemble de la partie terminale 12, le centre de gravité étant situé sur l'axe A. La charge utile et les différents équipements de la partie terminale 12 sont de préférence agencés pour que la position du centre de gravité reste sensiblement inchangée au fur et à mesure de la combustion du propergol.

Les deux ensembles de vannes 24 et 26 sont situés à distance l'un de l'autre le long de l'axe A pour pouvoir générer des poussées latérales avec un moment de forces approprié en cas notamment de correction de tangage ou de lacet. En pratique, l'ensemble de vannes 26 est monté à l'extrémité avant du corps de propulseur 20 ou à proximité de cette extrémité avant, par exemple en position décalée vers l'avant. Le bras de levier (distance entre point d'application de poussée et centre de gravité) est ainsi maximisé dans l'encombrement disponible.

Avantageusement, les vannes 24a, 24b, 24c, 24d, 26a, 26b, 26c et 26d sont toutes identiques, ce qui simplifie la définition et la réalisation du système DACS. Une telle simplification résulte aussi du montage des vannes à l'extérieur du corps de propulseur 20, ce montage assurant par ailleurs une bonne sécurité pyrotechnique. Avantageusement aussi, mais non nécessairement, les axes de poussée de toutes les vannes sont situés à même distance de l'axe A.

De façon en soi connue, le dispositif de commande 28 agit sur des actionneurs (non représentés) associés respectivement aux différentes vannes des ensembles 24 et 26 pour commander leur degré d'ouverture, c'est-à-dire la section de passage des gaz dans des conduites reliant les vannes au corps de propulseur, les vannes étant donc à ouverture variable commandée entre fermeture totale et pleine ouverture.

Le bloc de propergol 22 est allumé après séparation de la partie terminale 12 du reste du missile.

Aussi longtemps qu'une correction de trajectoire ou d'attitude n'est pas requise, toutes les vannes des ensembles 24 et 26, ou certaines de celles-ci disposées de façon symétrique, sont maintenues ouvertes avec un même degré d'ouverture pour permettre l'échappement des gaz de combustion sans générer de poussée résultante. En variante, après une phase de correction, une extinction du propergol peut être provoquée par pleine ouverture simultanée de toutes les vannes, le rallumage du propergol étant effectué dès qu'une nouvelle correction est requise.

Lorsqu'une correction est requise, le dispositif de commande 30 provoque la fermeture de certaines vannes afin de ne laisser ouvertes que celles utiles à la génération des poussées individuelles qui, combinées, apportent la correction requise, le degré d'ouverture des vannes laissées ouvertes étant ajustable.

Dans la description détaillée qui précède, le corps de propulseur formant générateur de gaz contient un seul bloc de propergol solide. En variante, plusieurs blocs séparés de propergol pourront être prévus, susceptibles d'être allumés pendant différentes périodes respectives du vol de la partie terminale 12, chaque bloc alimentant en gaz l'ensemble des vannes lorsqu'il est allumé.

Il est également possible d'utiliser un générateur de gaz à ergols liquides ou à ergols hybrides.

Des exemples de configuration d'ouvertures de vannes pour différents types de correction sont décrits ci-après. On notera que dans la plupart des cas, l'une au moins des vannes dans chacun des ensembles 24 et 26 de vannes est ouverte, les ressources en vannes étant mutualisées pour les différents types de correction.

### Exemple 1 : Déviation de trajectoire

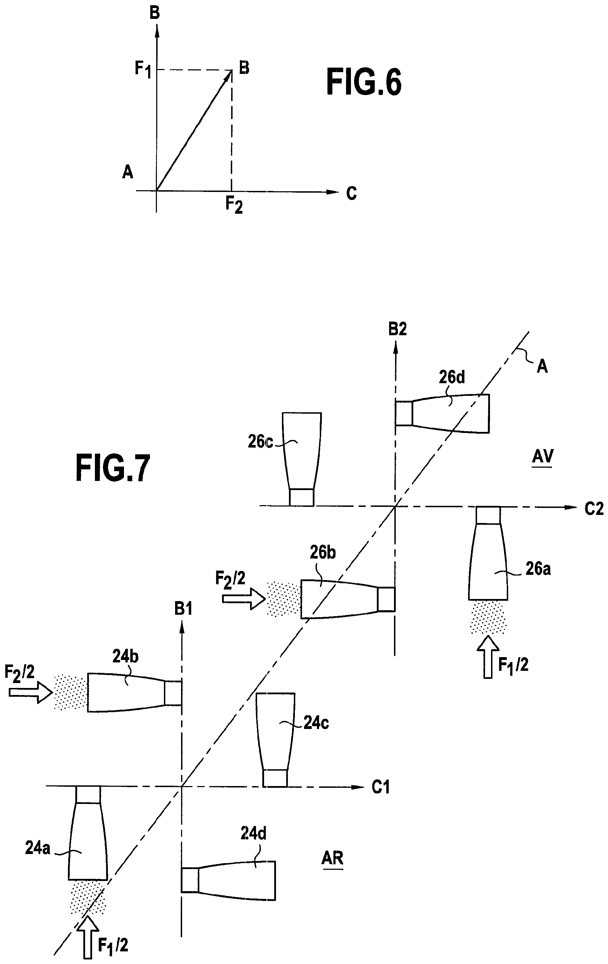

Une correction de trajectoire est par exemple requise par déviation de celle-ci par application d'une poussée latérale F telle que montrée sur la figure 6, cette poussée se décomposant en une composante F₁ sur un axe B parallèle aux axes B1 et B2 et une composante F₂ sur un axe C parallèle aux axes C1 et C2.

La figure 7 montre très schématiquement les vannes restant ouvertes sous la commande du dispositif de commande 28, les autres vannes étant fermées. La composante F₁ est produite par les vannes 24a et 26a dont l'ouverture est ajustée pour générer chacune une poussée F₁/2. La composante F₂ est produite par les vannes 24b et 26b dont l'ouverture est ajustée pour générer chacune une poussée F₂/2. Les autres vannes des ensembles 24 et 26 sont fermées.

Les vannes 24a et 26a sont situées sur deux côtés opposés de l'axe A, de sorte que les moments de rotation produits par les poussées des deux vannes s'annulent. Il en est de même pour les vannes 24b et 26b. Ainsi, la déviation de trajectoire n'induit pas de perturbation d'attitude.

### Exemple 2 : Correction de roulis

Une correction de roulis est produite dans cet exemple par l'ouverture simultanée de deux vannes générant des poussées dans des directions opposées dans l'un des ensembles de vannes, selon le sens de la rotation à corriger.

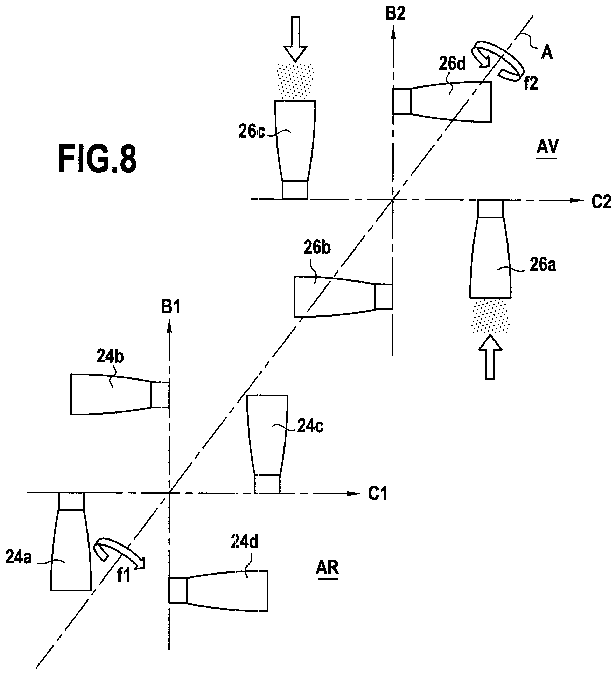

La figure 8 montre l'ouverture des seules vannes 26a et 26c dans l'ensemble 26 à l'avant du corps de propulseur pour une correction de roulis appliquée dans le sens de rotation f₂. Les vannes de l'ensemble 24 à l'avant du corps de propulseur peuvent être fermées ou maintenues à une même ouverture suffisamment faible pour ne pas annuler l'effet des vannes 26a et 26ç. Les vannes 26a, 26c génèrent des poussées de même amplitude pour ne pas induire de poussée latérale résultante.

En variante, les quatre vannes de l'ensemble 26 pourraient être ouvertes.

Bien entendu, une correction de roulis à appliquer dans le sens de rotation f₁ serait produite par les poussées de deux vannes ou des quatre vannes de l'ensemble 24.

### Exemple 3 : Correction de lacet

Un mouvement de lacet est défini ici comme une oscillation autour d'un axe parallèle aux axes B1 et B2.

La correction de lacet peut donc être obtenue par génération d'une poussée latérale F₃ perpendiculaire aux axes B1 et B2 par une vanne de chacun des ensembles 24 et 26.

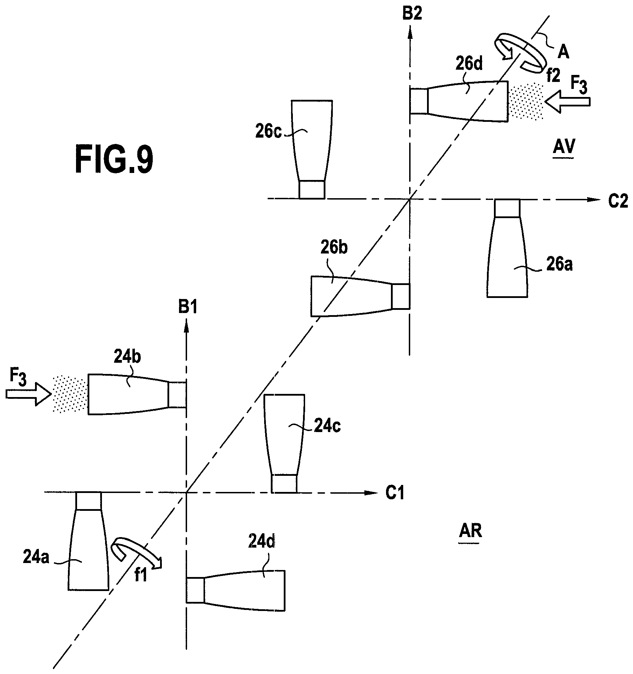

Dans l'exemple de la figure 9, la correction de lacet est obtenue par ouverture de la vanne 26d exerçant une poussée F₃, et de la vanne 24b exerçant également une poussée F₃, les autres vannes étant fermées. Aucun roulis n'est en principe engendré mais, si nécessaire, une éventuelle compensation de roulis peut être apportée comme décrit plus haut.

### Exemple 4 : Correction de tangage

Un mouvement de tangage est défini ici comme une oscillation autour d'un axe parallèle aux axes C1 et C2.

La correction de tangage peut donc être obtenue par génération d'une poussée latérale perpendiculaire aux axes C1 et C2 par une vanne de chacun des ensembles 24 et 26.

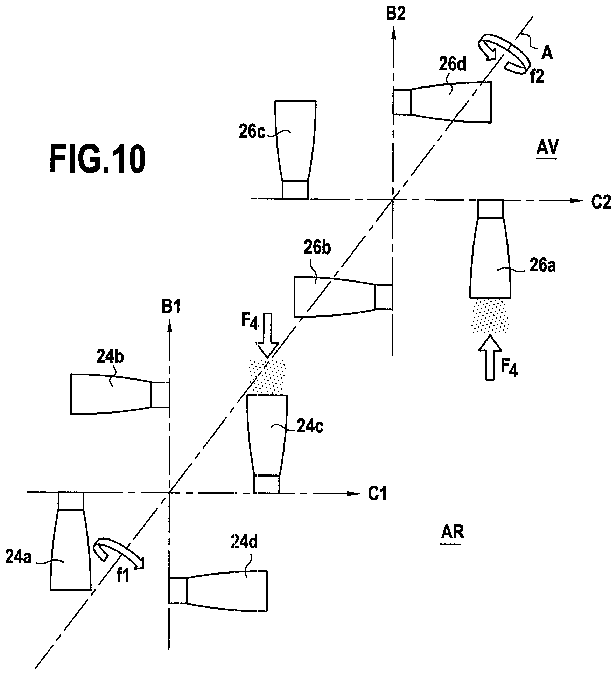

Dans l'exemple de la figure 10, la correction de tangage est obtenue par ouverture de la vanne 26a exerçant une poussée F₄ et de la vanne 24c exerçant également une poussée F₄, les autres vannes étant fermées. Aucun roulis n'est en principe engendré mais, si nécessaire, une éventuelle compensation de roulis peut être apportée comme décrit plus haut.

Dans les exemples qui précèdent, différentes configurations de corrections ont été montrées avec, dans chaque ensemble 24 ou 26 de vannes, deux paires de vannes agissant selon des directions parallèles à des axes orthogonaux B1 et C1 ou B2 et C2 et ayant des axes de poussée situés à même distance de l'axe A. Bien entendu, des mêmes corrections pourraient être réalisées dans le cas où les axes B1 et C1 ou B2 et C2, tout en étant différents, ne sont pas orthogonaux et/ou dans les cas où les axes de poussée des vannes ne sont pas tous à même distance de l'axe A, en commandant les vannes de façon appropriée pour produire la poussée latérale résultante désirée.

Dans tous les cas, une réponse à un besoin de déviation de trajectoire ou à un besoin de contrôle d'attitude en roulis, lacet ou tangage peut être obtenue de façon immédiate.

## Revendications

1. Système pour le pilotage en force et le contrôle d'attitude en vol d'un véhicule, comprenant un corps de propulseur (20) et une pluralité de vannes capables de générer des poussées latérales en étant mises en communication avec le corps de propulseur au moyen d'un dispositif de commande agencé pour agir individuellement sur chaque vanne, système dans lequel :
- les vannes sont réparties en un premier et un deuxième ensemble de vannes (24, 26), les deux ensembles étant disposés à distance l'un de l'autre respectivement vers l'avant et vers l'arrière du corps de propulseur, de façon sensiblement symétrique par rapport au centre de gravité du véhicule situé sur un axe longitudinal (A) de celui-ci,
- chaque ensemble de vannes (24, 26) est constitué de quatre vannes et comprend une première paire de vannes (24a, 24c; 26a, 26c) disposées pour générer des poussées latérales dans des directions de poussée ayant des sens opposés, selon des axes de poussée non alignés et parallèles à un premier axe (B1; B2) et une deuxième paire de vannes (24b, 24d; 26b, 26d) disposées pour générer des poussées latérales dans des directions de poussée ayant des sens opposés, selon des axes de poussée non alignés et parallèles à un deuxième axe (C1; C2), et
- le premier axe (B1; B2) et le deuxième axe (C1; C2) sont distincts et perpendiculaires à l'axe longitudinal (A) du véhicule,
**caractérisé en ce que** les vannes du premier ensemble (24) sont disposées pour que leurs poussées induisent un moment de rotation autour de l'axe longitudinal (A) dans un sens f1 et les vannes du deuxième ensemble (26) sont disposées pour que leurs poussées induisent un moment de rotation autour de l'axe longitudinal (A) dans un sens f2 opposé au sens f1.

2. Système selon la revendication 1, dans lequel, dans chaque ensemble de vannes, le premier axe et le deuxième axe sont perpendiculaires entre eux.

3. Système selon la revendication 1 ou 2, dans lequel les vannes sont toutes identiques.

4. Système selon l'une quelconque des revendications 1 à 3, dans lequel les axes de poussée de toutes les vannes sont situés à même distance de l'axe longitudinal du véhicule.

5. Système selon l'une quelconque des revendications 1 à 4, dans lequel les vannes sont situées à l'extérieur du corps de propulseur.

6. Système selon l'une quelconque des revendications 1 à 5, dans lequel le corps de propulseur renferme un générateur de gaz comprenant du propergol solide.

7. Système selon la revendication 7, dans lequel le corps de propulseur renferme un bloc unique de propergol (22).

8. Système selon l'une quelconque des revendications 1 à 5, dans lequel le corps de propulseur renferme un générateur de gaz à ergols liquides ou à ergols hybrides.

9. Engin aérien ou spatial comprenant un système selon l'une quelconque des revendications 1 à 8.

10. Missile (10) ayant une partie terminale (12) équipée d'un système selon l'une quelconque des revendications 1 à 8.

## Patentansprüche

1. System zur Direktschubflugsteuerung und Fluglagensteuerung eines Fahrzeugs, das einen Antriebskörper (20) und eine Vielzahl von Ventilen umfasst, die fähig sind, seitliche Schübe zu erzeugen, indem sie mit dem Antriebskörper mittels einer Steuervorrichtung in Kommunikation versetzt werden, die eingerichtet ist, um einzeln auf jedes Ventil einzuwirken, System bei dem:
- die Ventile in einer ersten und zweiten Einheit von Ventilen (24, 26) angeordnet sind, wobei die zwei Einheiten voneinander jeweils zur Vorderseite und Rückseite des Antriebskörpers im Wesentlichen symmetrisch in Bezug zu dem Schwerpunkt des Fahrzeugs, der sich auf einer Längsachse (A) dieses befindet, angeordnet sind,
- wobei jede Einheit von Ventilen (24, 26) aus vier Ventilen besteht und ein erstes Paar von Ventilen (24a, 24c; 26a, 26c) umfasst, die angeordnet sind, um seitliche Schübe in Schubrichtungen, die entgegengesetzte Richtungen haben, entlang der Schubachsen, die nicht ausgerichtet sind, und parallel zu einer ersten Achse (B1, B2) sind, zu erzeugen, und ein zweites Paar von Ventilen (24b, 24d; 26b, 26d), die angeordnet sind, um seitliche Schübe in Schubrichtungen, die entgegengesetzte Richtungen haben, entlang der Schubachsen, die nicht ausgerichtet sind, und parallel zu einer zweiten Achse (C1; C2) zu erzeugen,
- wobei die erste Achse (B1; B2) und die zweite Achse (C1; C2) getrennt und zu der Längsachse (A) des Fahrzeugs senkrecht sind,
**dadurch gekennzeichnet, dass** die Ventile der ersten Einheit (24) so angeordnet sind, dass ihre Schübe eine Rotationsbewegung um die Längsachse (A) in eine Richtung f1 bewirken, und die Ventile der zweiten Einheit (26) so angeordnet sind, dass ihre Schübe eine Rotationsbewegung um die Längsachse (A) in eine Richtung f2, die zu der Richtung f1 entgegengesetzt ist, bewirken.

2. System nach Anspruch 1, wobei in jeder Einheit von Ventilen die erste Achse und die zweite Achse zueinander senkrecht sind.

3. System nach Anspruch 1 oder 2, wobei die Ventile alle identisch sind.

4. System nach einem der Ansprüche 1 bis 3, wobei die Schubachsen aller Ventile in derselben Entfernung von der Längsachse des Fahrzeugs liegen.

5. System nach einem der Ansprüche 1 bis 4, wobei die Ventile außerhalb des Antriebskörpers liegen.

6. System nach einem der Ansprüche 1 bis 5, wobei der Antriebskörper einen Gasgenerator einschließt, der Festtreibstoff umfasst.

7. System nach Anspruch 7, wobei der Antriebskörper einen einzigen Block aus Festtreibstoff (22) einschließt.

8. System nach einem der Ansprüche 1 bis 5, wobei der Antriebskörper einen Gasgenerator mit Flüssigergolen oder Hydbridergolen einschließt.

9. Luft- oder Raumfahrzeug, das ein System nach einem der Ansprüche 1 bis 8 umfasst.

10. Geschoss (10), das einen Endteil (12), der mit einem System nach einem der Ansprüche 1 bis 8 ausgestattet ist, hat.

## Claims

1. A system for providing a vehicle with in-flight attitude control and side-force steering, the system comprising a thruster body (20) and a plurality of valves capable of generating side thrusts by being put into communication with the thruster body by means of a control device arranged to act individually on each valve, in which system:
• the valves are distributed in first and second sets of valves (24, 26), the two sets being disposed at a distance apart from each other respectively towards the front and towards the rear of the thruster body in a manner that is substantially symmetrical about the center of gravity of the vehicle, which center of gravity is situated on a longitudinal axis (A) of the vehicle;
• each set of valves (24, 26) is constituted by four valves and comprises a first pair of valves (24a, 24c; 26a, 26c) arranged to generate side thrust in opposite directions along thrust axes that are not aligned and are parallel to a first axis (B1; B2), and a second pair of valves (24b, 24d; 26b, 26d)that are arranged to generate side thrust in opposite thrust directions along thrust axes that are not aligned and are parallel to a second axis (C1; C2); and
• the first and second axes (B1; B2; C1; C2) are distinct and perpendicular to the longitudinal axis (A) of the vehicle,
**characterized in that** the valves of the first set of values (24) are arranged so that their thrusts give rise to rotational torque about the longitudinal axis (A) in a direction f1 and **in that** the valves of the second set of valves (26) are arranged so that their thrusts give rise to rotational torque about the longitudinal axis (A) in a direction f2 opposite to the direction f1.

2. A system according to claim 1, wherein the first and second axes in each set of valves are mutually perpendicular.

3. A system according to claim 1 or claim 2, wherein the valves are all identical.

4. A system according to any one of claims 1 to 3, wherein the thrust axes of all of the valves are situated at the same distance from the longitudinal axis of the vehicle.

5. A system according to any one of claims 1 to 4, wherein the valves are situated outside the thruster body.

6. A system according to any one of claims 1 to 5, wherein the thruster body contains a gas generator comprising solid propellant.

7. A system according to claim 6, wherein the thruster body contains a single block of propellant (22).

8. A system according to any one of claims 1 to 5, wherein the thruster body contains a gas generator using liquid propellants or hybrid propellants.

9. A space or air vehicle including a system according to any one of claims 1 to 8.

10. A missile (10) having a terminal portion (12) fitted with a system according to any one of claims 1 to 8.
